# EUROPEAN PATENT SPECIFICATION

(11) **EP 1 139 725 B1**
(45) Date of publication and mention of the grant of the patent: **09.02.2005**
(21) Application number: 00964789.2
(22) Date of filing: 19.09.2000
(51) Int. Cl.: A01K 3/00

(54) **AN IMPLEMENT FOR DEMARCATING AN AREA, AS WELL AS A VEHICLE SUITABLE FOR BEING USED IN SAID IMPLEMENT**
VORRICHTUNG ZUR ABGRENZUNG EINER GEBIET, SOWIE FAHRZEUG ZUR ANWENDUNG MIT DIESER VORRICHTUNG
SYSTEME SERVANT A DELIMITER UNE ZONE ET DISPOSITIF DE TRANSPORT UTILISE DANS LEDIT SYSTEME

(30) Priority: 20.10.1999 NL 1013349
(43) Date of publication of application: 10.10.2001
(60) Divisional application: 04077646.0
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000661
(87) International publication number: WO 2001/028317

(56) References cited:
- DE-A- 4 215 714
- FR-A- 2 488 103
- US-A- 4 341 181

## Description

The invention relates to an implement according to the preamble of claim 1, as well as to a vehicle which is suitable for being used in said implement see DE-A-4 215 714. Such implements are used e.g. for demarcating the pasture area of cows or sheep. In the known implements i.a. the flexibility leaves room for improvement.

The invention aims at providing an improved implement. According to the invention this is achieved by the measures mentioned in the characterizing part of claim 1. With the aid of the vehicle the end of a section of the demarcation element can be brought into a desired position, so that the implement is extremely flexible and compact and allows a better control of the demarcation. The other end of the section can be positioned with the aid of a further vehicle or by means of a fixed reference point.

The invention will now be explained in further detail with reference to the accompanying drawing.
Figure 1 is a schematic front view of a first embodiment of a vehicle to be used in the implement according to the invention;
Figure 2 shows a detail of the vehicle depicted in Figure 1;
Figure 3 is a plan view of a first pasture where the implement according to the invention is applied;
Figure 4 is a plan view of a further pasture where the implement according to the invention is applied;
Figure 5 is a schematic plan view of another pasture where the implement according to the invention is applied;
Figure 6 is a schematic front view of a second embodiment of a vehicle to be used in the implement according to the invention, and
Figure 7 shows, in plan view, a detail of the vehicle depicted in Figure 6.

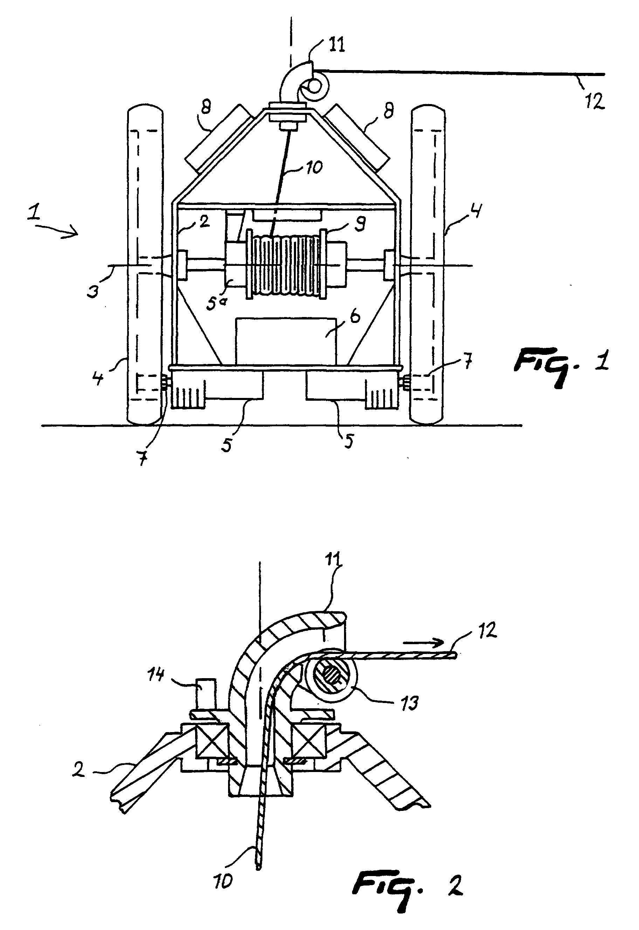

Figure 1 is a schematic front view of a first embodiment of a vehicle 1 to be used in the implement according to the invention. The vehicle 1 is an unmanned vehicle comprising a chassis 2 with two wheels 4 that are bearing-supported on an axis 3. The centre of gravity of the chassis 2 is situated below the axis 3, so that the chassis 2 maintains substantially the same orientation relative to the axis 3 when the vehicle 1 is moving. The wheels 4 may be made of synthetic material and have a diameter of e.g. approximately 750 mm. Of course, the vehicle 1 may be provided with more wheels 4. However, the embodiment as a two-wheeled vehicle has various advantages, as will be set out hereinafter.

Both wheels 4 of the vehicle 1 are drivable independently of each other with the aid of motors 5 which are connected to an accumulator 6 and which, via gears 7 that cooperate with an internal toothing in the wheels 4, are capable of making each of the wheels 4 rotate about the axis 3. On the chassis 2 there are further provided solar panels 8 for energy supply. Because of the independently drivable wheels 4 the vehicle 1 has an excellent manoeuvrability and an accurate controllability. The vehicle 1 is also capable of easily surmounting small obstructions without harmful consequences. The vehicle is remotely controlled, e.g. by means of a (non-shown) computer which is in connection with all the vehicles 1 of the implement. The implement may be provided with a positioning system, such as e.g. GPS, for the vehicle(s) 1. The computer may be programmed such that the vehicles 1 move at predetermined points of time according to a predetermined pattern.

The vehicle 1 is further provided with a drum 9 which is drivable by means of a further motor 5a for winding and unwinding an adjustable section of a demarcation element 10. Said demarcation element 10 may e.g. be constituted by a cord, band, ribbon, strip, (electrified) wire, cable or rope. The further motor 5a of the drum 9 is also suitable for tightening the demarcation element 10. The drum 9 may further be provided with a spring which also serves for putting the demarcation element 10 under tension. The demarcation element 10 extends upwardly from the drum 9 and then goes on to a further fastening point via a guide element 11 which is rotatable about a vertical axis. Thus, the vehicle 1 is permanently connected to the demarcation element 10 and suitable for adjustably positioning an end of an unwound, tightened, substantially straight extending section 12 of the demarcation element 10.

When the demarcation element 10 is designed as an electrified wire, the vehicle 1 is further provided with a (non-shown) sliding contact with the ground. The demarcation element 10 may also be designed as a double conductor (e.g. in a strip). This has the advantage that a mutual communication between several vehicles 1 and/or between a vehicle 1 and the controlling computer is possible via the two conductors. In this situation a sliding contact is superfluous.

Figure 2 shows a detail of the vehicle depicted in Figure 1. The rotatable guide element 11 for the demarcation element 10 is provided with length measuring means (the measuring wheel 13) for determining the length of a wound or unwound section of the demarcation element 10. There are further provided angle measuring means (the angle measuring device 14) for determining the angle between a horizontal reference direction of the vehicle 1 (e.g. the direction of travel of the vehicle 1) and the direction of the substantially straight extending section 12 of the demarcation element 10. By means of the angle measuring device 14 and the measuring wheel 13 it is possible to determine exactly the length of the straight section 12 and the angle through which said straight section 12 extends relative to the reference direction of the vehicle 1. Accordingly, also the position of the other end of the straight section 12 is known, even without making use of a positioning system such as GPS. It is also possible to use a compass instead of the angle measuring device 14.

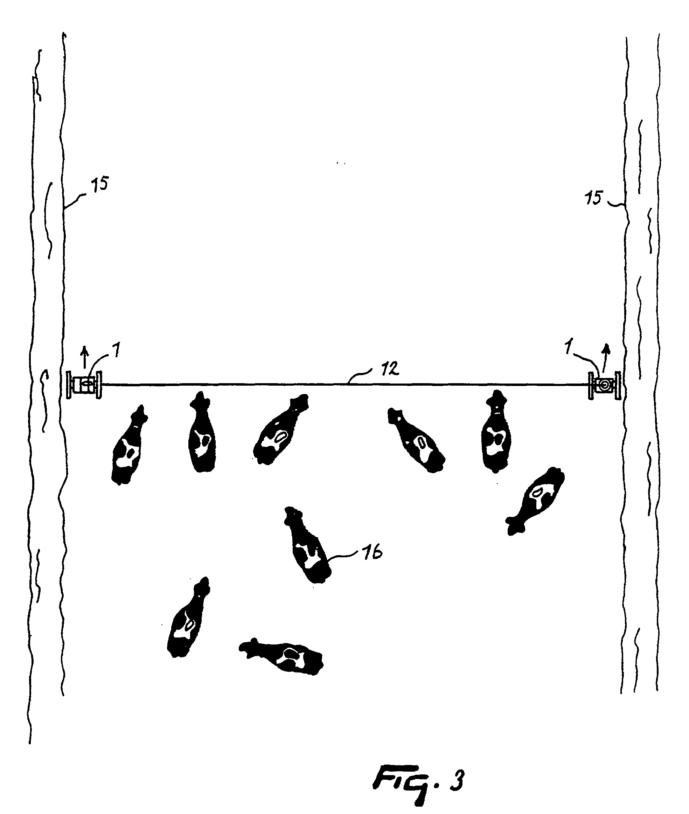

Figure 3 is a plan view of a first pasture where the implement according to the invention is applied. The pasture is confined by ditches 15. The area between the ditches 15, where the cows 16 are allowed to graze, is delimited by two vehicles 1 positioning together a straight section 12 of the demarcation element which is not crossed by the cows 16. By moving the unmanned, remotely controlled vehicles 1 in the direction of the arrows the area where the cows 16 are allowed to graze changes. In a further, non-shown embodiment one single vehicle 1 is used, while the other end of the straight section 12 is connected to a fixed point.

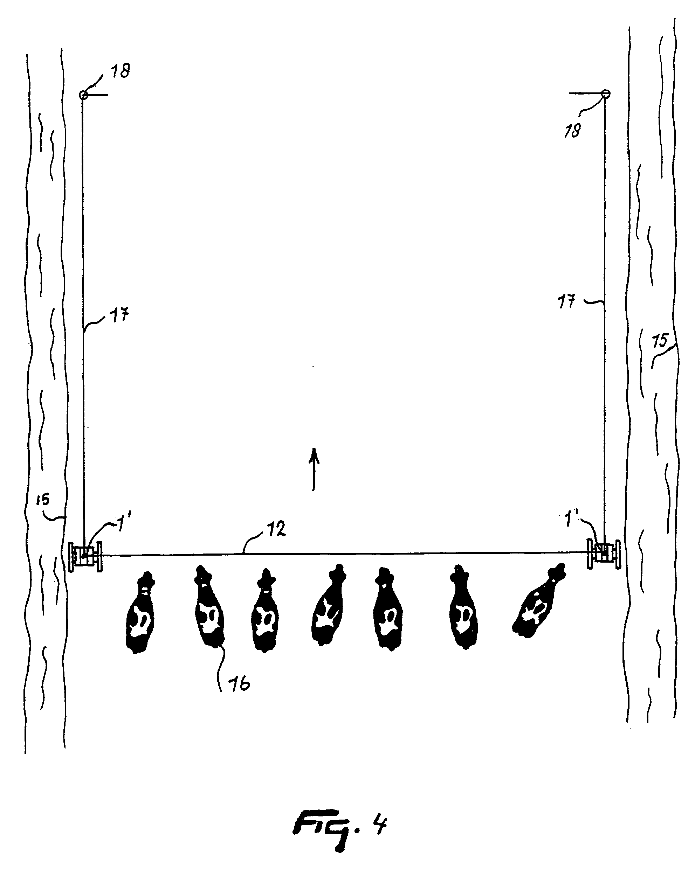

Figure 4 is a plan view of a further pasture where the implement according to the invention is applied. In this embodiment the vehicles 1' are each connected via a winch 17 to a fixed reference point 18. By means of the winch 17 each vehicle 1' is pulled in the direction of the reference point 18, so that the area where the cows 16 are allowed to graze changes continuously. In this situation the vehicles 1' may be designed without the motors 5.

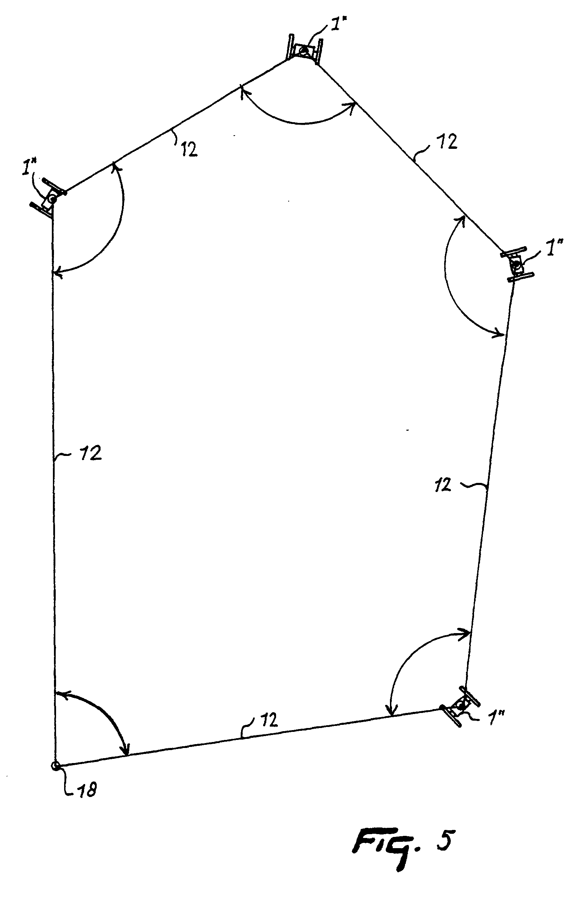

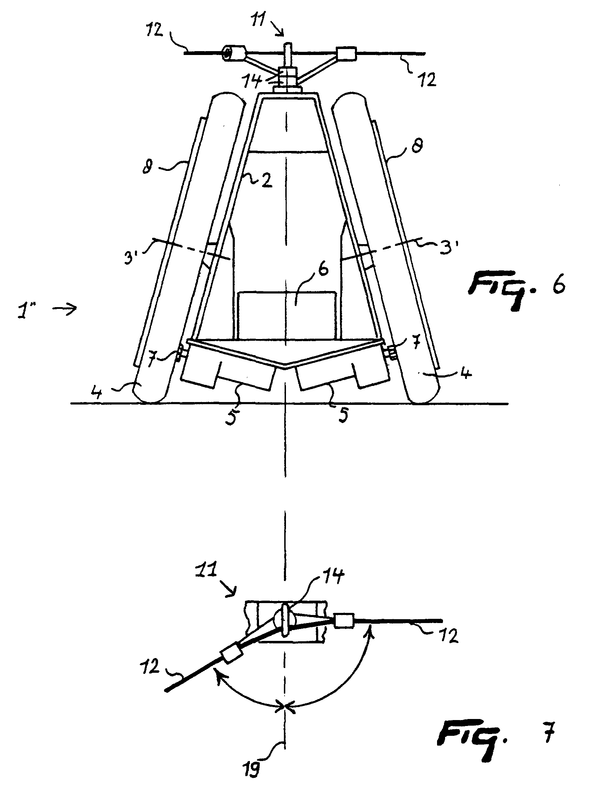

Figure 5 is a schematic plan view of another pasture where the implement according to the invention is applied. In this embodiment the implement is provided with a reference point 18 for fastening the ends of the demarcation element 10. Although this reference point 18 is initially adjustable, it remains fixed after the initial setting. The four vehicles 1" will be described hereinafter in further detail with reference to figures 6 and 7. In this situation the means 9 for winding and unwinding the demarcation element 10 are disposed at the reference point 18, as well as the tightening means 5a. The reference point 18 is also provided with angle measuring means 14 for determining the angle between a (horizontal) reference direction of the reference point 18 and the direction of the ends of the demarcation element 10. Each vehicle 1" is equipped with means for determining the angle between the two straight sections 12 of the demarcation element converging in the relevant vehicle 1". Movement of the vehicles 1" makes it possible to change the area to be demarcated in a simple manner.

Figure 6 is a schematic front view of the embodiment of the vehicle to be used in the implement depicted in Figure 5. The wheels 4 of the vehicle 1" are attached to the vehicle 1" in such a way that their imaginary axes 3' intersect in a point which is situated at a lower level than the centres of the wheels 4, which contributes to the stability of the vehicle 1". Moreover, in this situation it is possible to provide the solar panels 8 for energy supply at the outside of the obliquely placed wheels 4. The vehicle 1" has no drum 9. The straight sections 12 of the demarcation element are guided through the guide element 11.

Now the angle measuring device 14 is designed such that it is possible to determine the angle between the two straight sections 12 of the demarcation element converging in the vehicle 1". This may be realized e.g. by measuring by means of two angle measuring devices the angle between a reference direction 19 of the vehicle 1" and each relevant straight section 12 of the demarcation element. This is further illustrated in Figure 7 showing, in plan view, a detail of the vehicle depicted in Figure 6. The vehicle 1" is permanently connected to the demarcation element 10, which is capable of being wound and unwound and being tightened and which is suitable for adjustably positioning an end of two substantially straight extending, unwound, tightened sections 12 of the demarcation element 10.

The implement may be provided with means for determining the distance from one of the vehicles 1, 1', 1" to an adjustable measuring point, in particular to one of the further vehicles 1, 1', 1". These non-shown means, which are known per se, may comprise a positioning system, such as e.g. GPS. The means may also be equipped with an ultrasonic sensor or an infrared sensor.

The implement may further be provided with means for determining the contours of the area to be demarcated. When the positions of the vehicles 1, 1', 1" and the reference point 18 are known, it is possible to determine, e.g. with the aid of the computer, all sorts of data concerning the area to be demarcated (surface, circumference, etc.).

In a further, non-shown embodiment the vehicle 1 is provided with two drums 9, which are capable of being controlled independently of each other. This makes the implement even more flexible and more readily employable.

## Claims

1. An implement for demarcating an area, in particular for restricting the freedom of movement of animals walking about freely, said implement being provided with a demarcation element (10) and at least one vehicle (1, 1', 1") connected thereto, said vehicle being suitable for adjustably positioning an end of at least a section (12) of the demarcation element (10), said implement being provided with winding means (9, 5a) for winding and unwinding an adjustable section of the demarcation element (10), **characterized in that** the winding means (9, 5a) are provided with length measuring means (13) for determining the length of a wound or unwound section of the demarcation element (10).

2. An implement as claimed in claim 1, **characterized in that** the demarcation element (10) is designed as an element which is capable of being wound and unwound.

3. An implement as claimed in claim 1 or 2, **characterized in that** the demarcation element (10) is designed as an element which is capable of being tightened.

4. An implement as claimed in any one of claims 1 to 3, **characterized in that** said implement is provided with at least one adjustable reference point (18) for fastening at least one end of the demarcation element (10).

5. An implement as claimed in claim 3 or 4, **characterized in that** said implement is provided with tightening means (5a) for tightening the demarcation element (10).

6. An implement as claimed in claim 5, **characterized in that** the tightening means (5a) are fitted to the vehicle (1, 1').

7. An implement as claimed in claim 5 or 6, **characterized in that** the tightening means (5a) are disposed at the reference point (18).

8. An implement as claimed in any one of the preceding claims, **characterized in that** the winding means (9, 5a) are fitted to the vehicle (1, 1').

9. An implement as claimed in claims 4 and 8, **characterized in that** the winding means (9, 5a) are disposed at the reference point (18).

10. An implement as claimed in any one of claims 1 to 9, **characterized in that** the vehicle (1, 1', 1") is provided with angle measuring means (14) for determining the angle between a reference direction (19) of the vehicle (1, 1', 1") and the direction of the substantially straight extending section(s) (12) of the demarcation element (10).

11. An implement as claimed in any one of claims 4 to 10, **characterized in that** the reference point (18) is provided with angle measuring means (14) for determining the angle between a reference direction of the reference point (18) and the direction of the end(s) of the demarcation element (10).

12. An implement as claimed in any one of claims 1 to 11, **characterized in that** the vehicle (1, 1', 1") is provided with solar panels (8) for its energy supply.

13. An implement as claimed in any one of claims 1 to 12, **characterized in that** the vehicle (1, 1', 1") is an unmanned vehicle.

14. An implement as claimed in any one of claims 1 to 13, **characterized in that** the vehicle (1, 1', 1") is designed as a two-wheeled vehicle.

15. An implement as claimed in claim 14, **characterized in that** both wheels (4) of the vehicle (1, 1', 1") are drivable independently of each other.

16. An implement as claimed in claim 14 or 15, **characterized in that** the wheels (4) of the vehicle (1") are fitted to the vehicle (1") in such a way that their imaginary axes (3') intersect in a point which is situated at a lower level than the centres of the wheels (4).

17. An implement as claimed in any one of claims 5 to 16, **characterized in that** the tightening means (9, 5a) comprise a motor (5a).

18. An implement as claimed in any one of claims 1 to 17, **characterized in that** the implement is provided with a positioning system for the vehicle(s) (1, 1', 1").

19. An implement as claimed in any one of claims 1 to 18, **characterized in that** the implement is provided with means for determining the distance from the vehicle (1, 1', 1") to an adjustable measuring point, in particular to one of the further vehicles (1, 1', 1").

20. An implement as claimed in any one of claims 1 to 19, **characterized in that** the implement is provided with means for determining the contours of the area to be demarcated.

21. An implement as claimed in any one of claims 1 to 20, **characterized in that** the vehicle(s) (1, 1', 1") is/are remotely controllable.

22. An implement as claimed in any one of claims 1 to 21, **characterized in that** the demarcation element (10) is designed as a double conductor.

23. An implement as claimed in any one of claims 1 to 22, **characterized in that** said implement is provided with a computer for remotely controlling the vehicle(s) (1, 1', 1").

24. An implement as claimed in any one of claims 1 to 23, **characterized in that** the vehicle (1) is provided with two winding means (9, 5a) which are capable of being controlled independently of each other.

## Patentansprüche

1. Vorrichtung zur Abgrenzung eines Gebiets, insbesondere zur Einschränkung der Bewegungsfreiheit von frei umherlaufenden Tieren, wobei die Vorrichtung mit einem Abgrenzungselement (10) und mindestens einem mit diesem verbundenen Fahrzeug (1, 1', 1") versehen ist, wobei das Fahrzeug geeignet ist, ein Ende zumindest eines Abschnittes (12) des Abgrenzungselements (10) verstellbar zu positionieren, wobei die Vorrichtung mit Aufwickelvorrichtungen (9, 5a) zum Auf- und Abwickeln eines einstellbaren Abschnittes des Abgrenzungselements (10) versehen ist,
**dadurch gekennzeichnet, daß** die Aufwickelvorrichtungen (9, 5a) mit einer Längenmeßvorrichtung (13) zum Ermitteln der Länge eines auf- oder abgewickelten Abschnittes des Abgrenzungselements (10) versehen sind.

2. Vorrichtung nach Anspruch 1,
**dadurch gekennzeichnet, daß** das Abgrenzungselement (10) als Element ausgeführt ist, das auf- und abgewickelt werden kann.

3. Vorrichtung nach Anspruch 1 oder 2,
**dadurch gekennzeichnet, daß** das Abgrenzungselement (10) als Element ausgeführt ist, das festgespannt werden kann.

4. Vorrichtung nach einem der Ansprüche 1 bis 3,
**dadurch gekennzeichnet, daß** die Vorrichtung mit mindestens einem verstellbaren Bezugspunkt (18) versehen ist, um zumindest ein Ende des Abgrenzungselements (10) zu befestigen.

5. Vorrichtung nach Anspruch 3 oder 4,
**dadurch gekennzeichnet, daß** die Vorrichtung mit einer Festspannvorrichtung (5a) zum Festspannen des Abgrenzungselements (10) versehen ist.

6. Vorrichtung nach Anspruch 5,
**dadurch gekennzeichnet, daß** die Festspannvorrichtung (5a) an dem Fahrzeug (1, 1') angebracht ist.

7. Vorrichtung nach Anspruch 5 oder 6,
**dadurch gekennzeichnet, daß** die Festspannvorrichtung (5a) an dem Bezugspunkt (18) angeordnet ist.

8. Vorrichtung nach einem der vorhergehenden Ansprüche,
**dadurch gekennzeichnet, daß** die Aufwickelvorrichtungen (9, 5a) an dem Fahrzeug (1, 1') angebracht sind.

9. Vorrichtung nach den Ansprüchen 4 und 8,
**dadurch gekennzeichnet, daß** die Aufwickelvorrichtungen (9, 5a) an dem Bezugspunkt (18) angeordnet sind.

10. Vorrichtung nach einem der Ansprüche 1 bis 9,
**dadurch gekennzeichnet, daß** das Fahrzeug (1, 1', 1") mit einer Winkelmeßvorrichtung (14) zum Ermitteln des Winkels zwischen einer Bezugsrichtung (19) des Fahrzeugs (1, 1', 1") und der Richtung des/der sich im wesentlichen gerade erstreckenden Abschnitte(s) (12) des Abgrenzungselements (10) versehen ist.

11. Vorrichtung nach einem der Abschnitte 4 bis 10,
**dadurch gekennzeichnet, daß** der Bezugspunkt (18) mit einer Winkelmeßvorrichtung (14) zum Ermitteln des Winkels zwischen einer Bezugsrichtung des Bezugspunktes (18) und der Richtung des/der Endes/Enden des Abgrenzungselements (10) versehen ist.

12. Vorrichtung nach einem der Ansprüche 1 bis 11,
**dadurch gekennzeichnet, daß** das Fahrzeug (1, 1', 1") zur eigenen Stromversorgung mit Solarzellenplatten (8) versehen ist.

13. Vorrichtung nach einem der Ansprüche 1 bis 12,
**dadurch gekennzeichnet, daß** das Fahrzeug (1, 1', 1") ein unbemanntes Fahrzeug ist.

14. Vorrichtung nach einem der Ansprüche 1 bis 13,
**dadurch gekennzeichnet, daß** das Fahrzeug (1, 1', 1") als zweirädriges Fahrzeug ausgeführt ist.

15. Vorrichtung nach Anspruch 14,
**dadurch gekennzeichnet, daß** beide Räder (4) des Fahrzeuges (1, 1', 1") unabhängig voneinander antreibbar sind.

16. Vorrichtung nach Anspruch 14 oder 15,
**dadurch gekennzeichnet, daß** die Räder (4) des Fahrzeugs (1") an dem Fahrzeug (1") derart befestigt sind, daß sich ihre gedachten Achsen (3') in einem Punkt schneiden, der tiefer liegt als die Mittelpunkte der Räder (4).

17. Vorrichtung nach einem der Ansprüche 5 bis 16,
**dadurch gekennzeichnet, daß** die Festspannvorrichtungen (9, 5a) einen Motor (5a) umfassen.

18. Vorrichtung nach einem der Ansprüche 1 bis 17,
**dadurch gekennzeichnet, daß** die Vorrichtung mit einem Positioniersystem für das/die Fahrzeug(e) (1, 1', 1") versehen ist.

19. Vorrichtung nach einem der Ansprüche 1 bis 18,
**dadurch gekennzeichnet, daß** die Vorrichtung mit einer Vorrichtung versehen ist, um die Entfernung von dem Fahrzeug (1, 1', 1") zu einem verstellbaren Meßpunkt, insbesondere zu einem der weiteren Fahrzeuge (1, 1', 1") zu ermitteln.

20. Vorrichtung nach einem der Ansprüche 1 bis 19,
**dadurch gekennzeichnet, daß** die Vorrichtung mit einer Vorrichtung zum Ermitteln der Umrisse des abzugrenzenden Gebiets versehen ist.

21. Vorrichtung nach einem der Ansprüche 1 bis 20,
**dadurch gekennzeichnet, daß** das/die Fahrzeug(e) (1, 1', 1") fernsteuerbar ist/sind.

22. Vorrichtung nach einem der Ansprüche 1 bis 21,
**dadurch gekennzeichnet, daß** das Abgrenzungselement (10) als zweiadriges Kabel ausgeführt ist.

23. Vorrichtung nach einem der Ansprüche 1 bis 22,
**dadurch gekennzeichnet, daß** die Vorrichtung mit einem Computer zur Fernsteuerung des/der Fahrzeuge(s) (1, 1', 1") versehen ist.

24. Vorrichtung nach einem der Ansprüche 1 bis 23,
**dadurch gekennzeichnet, daß** das Fahrzeug (1) mit zwei Aufwickelvorrichtungen (9, 5a) versehen ist, die unabhängig voneinander gesteuert werden können.

## Revendications

1. Instrument pour démarquer une zone, en particulier pour restreindre la liberté de mouvement d'animaux étant libres de se déplacer, ledit instrument étant pourvu d'un élément de démarcation (10) et d'au moins un véhicule (1, 1', 1'') relié à celui-ci, ledit véhicule étant approprié pour positionner de façon réglable une extrémité d'au moins une section (12) de l'élément de démarcation (10), ledit instrument étant pourvu de moyens d'enroulement (9, 5a) pour enrouler et dérouler une section ajustable de l'élément de démarcation (10), **caractérisé en ce que** les moyens d'enroulement (9, 5a) sont pourvus de moyens de mesure de longueur (13) pour déterminer la longueur d'une section enroulée ou déroulée de l'élément de démarcation (10).

2. Instrument selon la revendication 1, **caractérisé en ce que** l'élément de démarcation (10) est conçu en tant qu'élément qui est capable d'être enroulé et déroulé.

3. Instrument selon la revendication 1 ou 2, **caractérisé en ce que** l'élément de démarcation (10) est conçu en tant qu'élément qui est capable d'être serré.

4. Instrument selon l'une quelconque des revendications 1 à 3, **caractérisé en ce que** ledit instrument est pourvu d'au moins un point de référence réglable (18) pour fixer au moins une extrémité de l'élément de démarcation (10).

5. Instrument selon la revendication 3 ou 4, **caractérisé en ce que** ledit instrument est pourvu de moyens de serrage (5a) pour serrer l'élément de démarcation (10).

6. Instrument selon la revendication 5, **caractérisé en ce que** les moyens de serrage (5a) sont installés sur le véhicule (1, 1').

7. Instrument selon la revendication 5 ou 6, **caractérisé en ce que** les moyens de serrage (5a) sont disposés au niveau du point de référence (18).

8. Instrument selon l'une quelconque des revendications précédentes, **caractérisé en ce que** les moyens d'enroulement (9, 5a) sont installés sur le véhicule (1, 1').

9. Instrument selon les revendications 4 et 8, **caractérisé en ce que** les moyens d'enroulement (9, 5a) sont disposés au niveau du point de référence (18).

10. Instrument selon l'une quelconque des revendications 1 à 9, **caractérisé en ce que** le véhicule (1, 1', 1'') est pourvu de moyens de mesure d'angle (14) pour déterminer l'angle entre une direction de référence (19) du véhicule (1, 1', 1'') et la direction de la/des section(s) s'étendant de façon sensiblement droite (12) de l'élément de démarcation (10).

11. Instrument selon l'une quelconque des revendications 4 à 10, **caractérisé en ce que** le point de référence (18) est pourvu de moyens de mesure d'angle (14) pour déterminer l'angle entre une direction de référence du point de référence (18) et la direction de la/des extrémité(s) de l'élément de démarcation (10).

12. Instrument selon l'une quelconque des revendications 1 à 11, **caractérisé en ce que** le véhicule (1, 1', 1'') est pourvu de panneaux solaires (8) pour son alimentation en énergie.

13. Instrument selon l'une quelconque des revendications 1 à 12, **caractérisé en ce que** le véhicule (1, 1', 1") est un véhicule automatique.

14. Instrument selon l'une quelconque des revendications 1 à 13, **caractérisé en ce que** le véhicule (1, 1', 1'') est conçu en tant que véhicule à deux roues.

15. Instrument selon la revendication 14, **caractérisé en ce que** les deux roues (4) du véhicule (1, 1', 1'') sont entraînables indépendamment l'une de l'autre.

16. Instrument selon la revendication 14 ou 15, **caractérisé en ce que** les roues (4) du véhicule (1'') sont installées sur le véhicule (V) de manière telle que leurs axes imaginaires (3') se croisent en un point qui est situé à un niveau plus bas que les centres des roues (4).

17. Instrument selon l'une quelconque des revendications 5 à 16, **caractérisé en ce que** les moyens de serrage (9, 5a) comprennent un moteur (5a).

18. Instrument selon l'une quelconque des revendications 1 à 17, **caractérisé en ce que** l'instrument est pourvu d'un système de positionnement pour le(s) véhicule(s) (1, 1', 1'').

19. Instrument selon l'une quelconque des revendications 1 à 18, **caractérisé en ce que** l'instrument est pourvu de moyens pour déterminer la distance du véhicule (1, 1', 1'') à un point de mesure ajustable, en particulier à un des autres véhicules (1', 1', 1'').

20. Instrument selon l'une quelconque des revendications 1 à 19, **caractérisé en ce que** l'instrument est pourvu de moyens pour déterminer les contours de la zone destinée à être démarquée.

21. Instrument selon l'une quelconque des revendications 1 à 20, **caractérisé en ce que** le(s) véhicule(s) (1, 1', 1") est/sont contrôlable(s) à distance.

22. Instrument selon l'une quelconque des revendications 1 à 21, **caractérisé en ce que** l'élément de démarcation (10) est conçu en tant que double conducteur.

23. Instrument selon l'une quelconque des revendications 1 à 22, **caractérisé en ce que** ledit instrument est pourvu d'un ordinateur pour contrôler le(s) véhicule(s) (1, 1', 1") à distance.

24. Instrument selon l'une quelconque des revendications 1 à 23, **caractérisé en ce que** le véhicule (1) est pourvu de deux moyens d'enroulement (9, 5a) qui sont capables d'être contrôlés indépendamment l'un de l'autre.
